# EUROPÄISCHE PATENTSCHRIFT

(11) **EP 1 420 710 B1**
(45) Veröffentlichungstag und Bekanntmachung des Hinweises auf die Patenterteilung: **15.10.2008**
(21) Anmeldenummer: 02767359.9
(22) Anmeldetag: 09.08.2002
(51) Int. Cl.: A61C 1/00

(54) **MEDIZINISCHES ODER DENTALMEDIZINISCHES HANDSTÜCK MIT EINEM HINTEREN UND EINEM VORDEREN SCHAFTABSCHNITT, DIE EINEN STUMPFEN WINKEL ZWISCHEN SICH EINSCHLIESSEN**
MEDICAL OR DENTAL HANDPIECE WITH A REAR AND A FRONT SHAFT SECTION THAT FORM AN OBTUSE ANGLE
PIECE A MAIN MEDICALE OU DENTAIRE PRESENTANT DES SEGMENTS DE TIGE ARRIERE ET AVANT FORMANT ENTRE EUX UN ANGLE OBTUS

(30) Priorität: 28.08.2001 EP 01120523; 28.02.2002 DE 10208691
(43) Veröffentlichungstag der Anmeldung: 26.05.2004
(60) Teilanmeldung: 08160946.3
(73) Patentinhaber: Kaltenbach & Voigt GmbH, 88400 Biberach / Riss (DE)
(72) Erfinder: KUHN, Bernhard, 88400 Biberach (DE)
(74) Vertreter: Schmidt-Evers, Jürgen
(86) Internationale Anmeldenummer: PCT/EP2002/008932
(87) Internationale Veröffentlichungsnummer: WO 2003/020149

(56) Entgegenhaltungen:
- DE-A- 19 848 556
- FR-A- 2 336 590
- FR-A- 2 522 493
- US-A- 4 278 428

## Beschreibung

Die Erfindung betrifft ein medizinisches oder dentalmedizinisches Handstück nach dem Oberbegriff des Anspruches 1.

Ein medizinisches oder dentalmedizinisches Handstück ist ein Gegenstand, der zur Bearbeitung des menschlichen Körpers bzw. natürlichen oder künstlichen Teilen davon, wie Prothesen, mit einem Werkzeug eingesetzt wird. Das Werkzeug ist in den meisten Ausgestaltungsfällen ein spanabhebendes Werkzeug, das bei einer Rotationsbewegung oder bei einer hin- und hergehenden Bewegung auf den Körper einwirkt. Als Antrieb dient ein Rotationsmotor, der im Handstück selbst oder in einem sog. Anschlussteil angeordnet sein kann, mit dem das Handstück durch eine Steckkupplung, insbesondere eine Steck/Dreh-Kupplung mit einer Kupplungsausnehmung an dem einen Teil und einen in die Kupplungsausnehmung einfassenden Kupplungszapfen an dem anderen Teil lösbar verbunden ist. Auch beim Vorhandensein eines hin- und hergehenden Werkzeugantriebs wird die Antriebsbewegung von einer Drehbewegung abgeleitet, die wenigstens ein Drehteil ausführt und hierzu im Innenring eines den Innenring und einen Außenring aufweisenden Wälzlagers drehbar gelagert ist. Zur axialen Positionierung des Innenrings und/oder des Außenrings eines Wälzlagers ist es üblich, Schulterflächen vorzusehen, an denen der betreffende Wälzlagerring anliegt und somit gegen eine axiale Bewegung begrenzt ist.

Bei einem in der DE 44 08 574 A1 beschriebenen dentalmedizinischen Handstück siehe insbesondere Fig. 1 und 2 dieser Druckschrift, ist der im vorderen Schaftabschnitt drehbar gelagerte Antriebswellenabschnitt durch ein Winkelzahnradgetriebe antriebsmäßig mit dem Werkzeughalter verbunden, der durch eine sich quer zum Schaft erstreckende und drehbar gelagerte Aufnahmehülse gebildet ist, auf der das zugehörige Winkelzahnrad mit dem am vorderen Antriebswellenabschnitt angeordneten Winkelzahnrad auf dessen der Einstecköffnung zugewandten Seite kämmt. Der zwischen der Mittelachse des Werkzeughalters und der Mittelachse des vorderen Schaftabschnitts eingeschlossene Winkel beträgt etwa 90°. Der vordere Antriebswellenabschnitt und ein nicht dargestellter hinterer Antriebswellenabschnitt sind durch ein Winkelzahnradgetriebe miteinander verbunden, dessen Zahnräder von ihren einanderzugewandten Seiten Zähne aufweisen, die in Eingriff miteinander stehen.

Aus der EP 0 185 400 B1 ist ebenfalls ein vorbeschriebenes Handstück zu entnehmen, das gemäß Fig. 2 im Scheitelbereichs einer Abwinklung einen Antriebswellenabschnitt aufweist, der jeweils durch ein Winkelzahnradgetriebe mit einem hinteren Antriebswellenabschnitt und einem vorderen Antriebswellenabschnitt verbunden ist, und sich schräg von hinten nach vorne zwischen dem hinteren und dem vorderen Antriebswellenabschnitt erstreckt.

In der Druckschrift DE 93 07 903 U1 ist ein dentalmedizinisches Handstück mit einem abgewinkelten Handstückschaft beschrieben, in dem ein hinterer Antriebswellenabschnitt, ein mittlerer Antriebswellenabschnitt und ein vorderer Antriebswellenabschnitt drehbar gelagert sind. Der mittlere Antriebswellenabschnitt ist bezüglich dem hinteren Antriebswellenabschnitt zur dem Werkzeug abgewandten Seite hin versetzt angeordnet, und er weist an seinem vorderen Ende, das sich im Knickbereich des Handstücks befindet, ein Hohlzahnrad auf, das mit einem hinteren Zahnrad am vorderen Antriebswellenabschnitt in der Weise kennt, dass letzteres auf seine, dem Werkzeug zugewandten Seite mit dem Hohlzahnrad des mittleren Antriebswellenabschnitts kämmt.

Bei einem solchen Handstück, in dem eine aus mehreren Antriebswellenabschnitten bestehende Antriebswelle für den Antrieb des Werkzeughalters drehbar gelagert ist, ergeben sich insbesondere im Bereich des Scheitels eines seitlich abgewinkelten oder gekrümmten Handstücks unter Berücksichtigung gewünschter Drehzahlen und/oder Drehrichtungen besondere Anforderungen, wobei auch hier eine kleine Bauweise anzustreben ist, um eine einfache Bauweise im beschränkten Raum eines Handstücks zu erreichen.

Der Erfindung liegt die Aufgabe zugrunde, ein Handstück der im Oberbegriff des Anspruchs 1 angegebenen Art hinsichtlich der Wirksamkeit der in Antriebsverbindung miteinander stehenden Antriebswellenabschnitte zu verbessern.

Diese Aufgabe wird durch die Merkmale des Anspruchs 1 gelöst. Vorteilhafte Weiterbildungen der Erfindung sind in den zugehörigen Unteransprüchen beschrieben.

Bei der erfindungsgemäßen Ausgestaltung nach Anspruch 1 kämmt das hintere Zahnrad des vorderen Antriebswellenabschnitts auf seiner der Einstecköffnung für das Werkzeug abgewandten Seite mit der der Einstecköffnung zugewandten Seite des Zahnrads des hinteren Antriebswellenabschnitts. Diese Ausgestaltung führt nicht nur zu einer einfachen und soliden Bauweise, sondern sie ermöglicht im Vergleich mit bekannten Antriebsverbindungen eine Drehrichtungsumkehr, die aus verschiedenen Gründen gewünscht sein kann. Es kann z. B. ein weiterer mittlerer Antriebswellenabschnitt vorgesehen sein, der es ermöglicht, die Drehrichtung des vorderen Antriebswellenabschnitts umzukehren und/oder Drehzahlübersetzungen oder Drehzahluntersetzungen zu verwirklichen. Hierdurch lässt sich das Handstück so verändern, dass es spezielle oder einen größeren Bereich von Anforderungen erfüllen können und sich deshalb der Einsatzbereich des Handstücks vergrößern lässt.

An ein Handstück der vorliegenden Art sind bezüglich seiner Handhabbarkeit an der Behandlungsstelle hohe Anforderungen gestellt. Dies deshalb, weil mit dem Handstück in vielen Fällen zum einen kleine und zum anderen genaue Arbeiten auszuführen sind. Hierbei ist aus ergonomischen Gründen eine handhabungsfreundliche Bauform des Handstücks und eine handhabungsfreundliche Position des Handstücks während der Behandlung oder Operation anzustreben, damit die Bedienungsperson ihre Aufmerksamkeit weniger auf das Handstück und vermehrt auf die Operationsstelle richten kann.

Es wird deshalb angestrebt, durch Weiterbildungen des Handstücks dessen Handhabbarkeit zu verbessern. Dies wird durch die Merkmale des Anspruchs 2 erreicht.

Bei der Weiterbildung nach Anspruch 2 schließen die Mittelachse des vorderen Schaftabschnitts und die Mittelachse der Einstecköffnung einen Winkel ein, der größer ist als 90° und zur Werkzeugseite des Handstücks hin offen ist. Außerdem kämmt das am vorderen Ende des vorderen Antriebswellenabschnitts angeordnete Zahnrad auf seiner der Werkzeugseite des Handstücks abgewandten Seite mit dem korrespondierenden Zahnrad des Werkzeughalters. Hierdurch erhält das Handstück eine Bauform, die ein ergonomisch günstiges Halten des Handstücks mit der Bedienungshand ermöglicht, und deshalb die Bedienungsperson in die Lage gesetzt wird, ihre Aufmerksamkeit weniger auf das manuelle Ergreifen des Handstücks und vermehrt auf die Behandlungs- bzw. Operationsmaßnahmen zu richten. Die erfindungsgemäße Ausgestaltung eignet sich besonders gut für ein dentalmedizinisches Handstück, weil sie an die Anatomie im Mundbereich des Patienten besser angepasst ist und die Beweglichkeit und Raumausnutzung im Mund des Patienten verbessert. Diesbezüglich liegt der Erfindung die Erkenntnis zugrunde, dass die menschlichen Ober- und Unterkiefer sich jeweils mit einem Winkel von etwa 20° öffnen lassen. Die erfindungsgemäße Ausgestaltung stellt diesbezüglich eine Mittelform dar, die es ermöglicht, das Handstück im vorhandenen Freiraum zwischen den Kiefern beidseitig zu bewegen.

Des weiteren führt diese Weiterbildung zu einer einfachen und konstruktiv günstigen Bauweise, die sich sowohl für ein sogenanntes Winkelhandstück als auch für ein im vorderen Bereich seitlich gekrümmtes Handstück eignet, wobei zu berücksichtigen ist, dass insbesondere für ein dentalmedizinisches Handstück die Baugröße beschränkt ist und deshalb eine kleine Bauweise angestrebt wird, die die erfindungsgemäße. Ausgestaltung ermöglicht.

Im Vergleich mit der eingangs angegebenen gattungsgemäßen Ausgestaltung führt die erfindungsgemäße Ausgestaltung zu einer Drehrichtungsumkehr für den Werkzeughalter bzw. das Werkzeug, wobei die Drehrichtungsumkehr kompensiert wird und somit ein Antrieb benutzt werden kann, der bezüglich der Drehrichtung unverändert ist.

Die erfindungsgemäße Ausgestaltung eignet sich sowohl für einen hinteren und einen vorderen Antriebswellenabschnitt als auch für einen zusätzlichen mittleren bzw. dritten Antriebswellenabschnitt, der sich bezüglich der Mittelachse des hinteren Antriebswellenabschnitts parallel oder dazu schräg erstrecken kann.

Weitere Unteranspruchsmerkmale ermöglichen eine günstige Lageranordnung, die sowohl die Bauweise der Lagerung vereinfacht als auch deren Montage bzw. Demontage und außerdem von kleiner Bauweise ist, die sich im Handstück günstig anordnen lässt.

Weitere Unteranspruchsmerkmale ermöglichen eine einfache, kleine und kostengünstig herstellbare Bauweise, die sich insbesondere für die beengten Raumverhältnisse in einem vorliegenden Handstück eignet. Außerdem werden eine axial wirksame Sicherung für ein Wälzlager und eine einfache Montage bzw. Demontage verschiedener Bauteile des Handstücks, insbesondere des Wälzlagers und/oder von Antriebswellenabschnitten ermöglicht.

Nachfolgend werden vorteilhafte Ausgestaltungen der Erfindung anhand von Ausführungsbeispielen und Zeichnungen näher erläutert.

Es zeigt:
- Fig. 1: ein erfindungsgemäßes Handstück in der Seitenansicht, das mit einem sog. Anschlussteil ein Behandlungsinstrument bildet;
- Fig. 2: ein erfindungsgemäßes Handstück in weiter abgewandelter Ausgestaltung im axialen Schnitt;
- Fig. 3: den mit Y gekennzeichneten mittleren Bereich des Handstücks nach Fig. 2 im vergrößerten axialen Schnitt;
- Fig. 4: den vorderen Endbereich des Handstücks im Längsschnitt in abgewandelter Ausgestaltung.

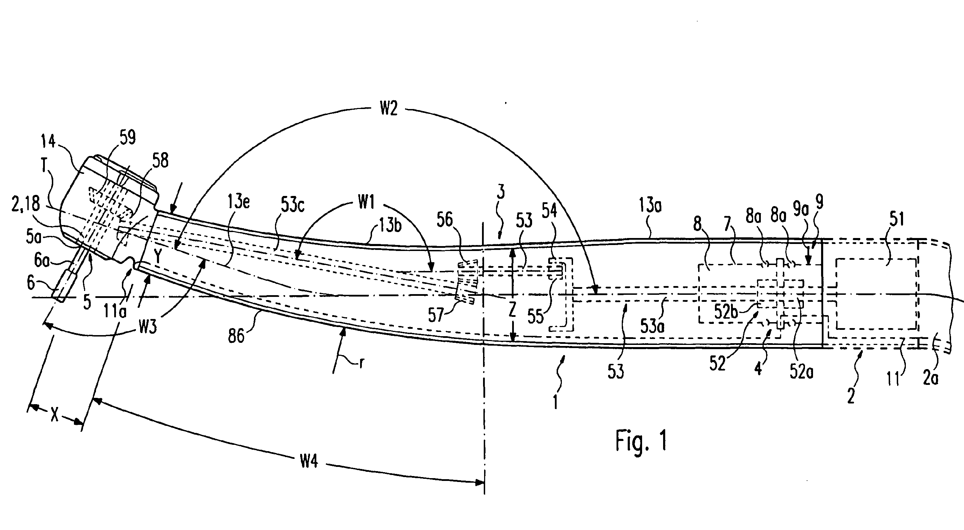

Das in Fig. 1 in seiner Gesamtheit mit 1 bezeichnete Behandlungsinstrument besteht aus einem hinteren Instrumententeil, nämlich einem sogenannten Anschlussteil 2, und einem vorderen Instrumententeil, nämlich dem sogenannten Handstück 3, die durch eine Kupplung 4 insbesondere eine Steckkupplung, vorzugsweise eine Steck/Dreh-Kupplung, lösbar miteinander verbunden sind. Beim vorliegenden Ausführungsbeispiel ist am vorderen Ende des Behandlungsinstruments 1 eine Haltevorrichtung 5 mit einer seitlichen Einstecköffnung 5a für ein Werkzeug 6 angeordnet, wobei das Werkzeug 6 seitlich oder nach vorne abstehen kann. Das Handstück 3 kann sich gerade (nicht dargestellt) oder zur dem Werkzeug 6 abgewandten Seite hin gekrümmt (strichpunktiert angedeutet) oder winkelförmig erstrecken. Die Steck/Dreh-Kupplung wird durch eine im Querschnitt runde Kupplungsausnehmung 7 und einen darin mit geringem Bewegungsspiel einsteckbaren Kupplungszapfen 8 gebildet. Beim vorliegenden Ausführungsbeispiel ist die Kupplungsausnehmung 7 am hinteren Ende des Handstücks 3 angeordnet, und der im wesentlichen zylindrische Kupplungszapfen 8 erstreckt sich vom Anschlussteil 2 nach vorne. Im gekuppelten Zustand sind die Kupplungsausnehmung 7 und der Kupplungszapfen 8 durch eine Verrastungsvorrichtung 9 lösbar miteinander verrastet. Diese weist ein Verrastungselement 9a auf, das in dem einen Kupplungsteil radial beweglich gelagert und durch eine Federkraft in eine die Teilungsfuge durchsetzende Verrastungsstellung vorgespannt ist, in der das Verrastungselement 9a in eine Ringnut im anderen Kupplungsteil einfasst. Eine solche Verrastungsvorrichtung 9 verrastet beim Kuppeln selbsttätig, und sie ist beim Entkuppeln durch eine manuelle axiale Zugkraftausübung überdrückbar, wobei das Verrastungselement 9a selbsttätig in seine Freigabestellung verdrängt wird.

Das Anschlussteil 2 ist mit einer flexiblen Versorgungsleitung 2a verbunden, die mit einem nicht dargestellten Steuergerät verbunden ist. Das Handstück 3 ist vorzugsweise auf dem Kupplungszapfen 8 frei drehbar gelagert, wodurch die Handhabbarkeit verbessert wird. Durch die Steck/Dreh-Kupplung 4 erstreckt sich wenigstens eine Medienleitung 11 für ein Behandlungs- oder Antriebsmedium, z. B. Wasser, Druckluft oder ein Wasser/Luft-Gemisch (Spray). Die Medienleitung 11 kann sich axial durch eine radiale Teilungsfuge (nicht dargestellt) oder Z-förmig durch eine hohlzylindrische Teilungsfuge zwischen der Kupplungsausnehmung 7 und dem Kupplungszapfen 8 erstrecken, wobei die Medienleitung 11 die Teilungsfuge im Bereich einer Ringnut im Kupplungszapfen 8 oder in der Kupplungsausnehmung 7 durchsetzt, so dass in jeder Drehstellung der Mediendurchgang gewährleistet ist. Beiderseits vom Durchgang ist die Teilungsfuge durch einen Dichtring 8a abgedichtet, der in einer Ringnut in der Wandung der Kupplungsausnehmung 7 oder in der Mantelfläche des Kupplungszapfens 8 angeordnet sein kann. Hierdurch ist eine freie Drehbarkeit um 360° und mehr gewährleistet. Die Medienleitung 11 erstreckt sich vom hinteren Ende des Behandlungsinstruments 1 zu dessen vorderem Endbereich, wobei sie teilweise als Kanal im Instrumentenkörper oder als Schlauch- bzw. Rohrleitung verlaufen kann. Die Medienleitung 11 mündet im vorderen Endbereich des Behandlungsinstruments 1 aus diesem aus, wobei diese Mündungsöffnung 11a auf die Behandlungsstelle bzw. auf die Spitze des Werkzeugs 6 gerichtet ist.

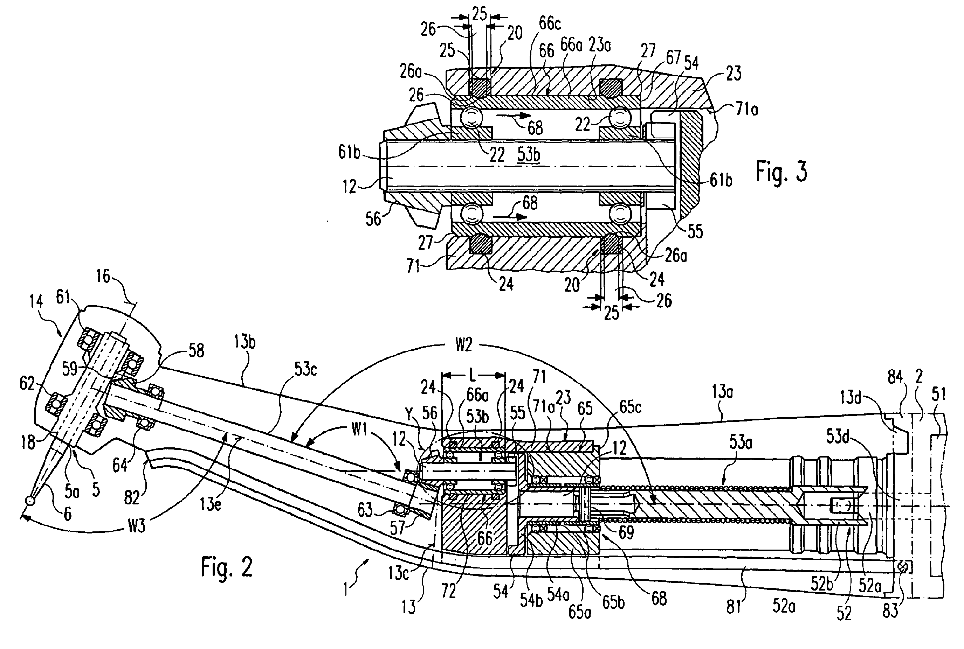

Bei allen Ausführungsbeispielen der Erfindung, bei denen gleiche oder vergleichbare Teile mit gleichen Bezugszeichen versehen sind, weist das Handstück 3 ein darin in einem Wälzlager drehbar gelagertes Drehteil 12 auf. Beim Ausführungsbeispiel nach Fig. 1 handelt es sich um ein mit einem bogenförmig gekrümmten (Fig. 1) oder abgewinkelten (Fig. 2) Schaft 13. Dieser kann einstückig ausgebildet sein oder aus einem hinteren oder vorderen Schaftabschnitt 13a, 13b bestehen, die am Beginn des Bogens oder an der Scheitelstelle des Winkels fest miteinander verbunden sind. Am vorderen Ende des Schaftes 13 befindet sich ein verdickter Kopf 14, in dem eine Aufnahmehülse 18 drehbar gelagert ist, in die das Werkzeug 6 mit seinem Schaft einsteckbar und in an sich bekannter Weise durch eine Fixiervorrichtung lösbar fixierbar ist.

Bei diesem Behandlungsinstrument 1 ist ein Antriebsmotor 51, z.B. ein Elektromotor, im strichpunktiert ergänzten Anschlussteil 2 angeordnet und durch eine Antriebswelle bzw. einen Antriebswellenzug 53 mit mehreren Antriebswellenabschnitten mit der Aufnahmehülse 18 antriebsmäßig verbunden. Im Bereich der Steckkupplung 4 weist der Antriebswellenzug 53 eine Steckkupplung 52 mit zwei formschlüssig miteinander korrespondierenden Steckkupplungselementen 52a, 52b auf, wodurch beim Kuppeln und Entkuppeln der Steckkupplung 4 zugleich ein Kuppeln und Entkuppeln der Steckkupplung 52 möglich ist.

Ein im hinteren Endbereich des Handstücks 3 angeordneter Antriebswellenabschnitt 53a erstreckt sich bis in den Anfangsbereich der Krümmung (Fig. 1) oder in den Scheitelbereich des abgewinkelten (Fig. 3) Schaftes 13, wobei sein vorderes Ende durch einen sich im wesentlichen nur in der Krümmung oder Abwicklung oder im Scheitelbereich z. B. axial erstreckenden zweiten Antriebswellenabschnitt 53b antriebsmäßig mit einem dritten Antriebswellenabschnitt 53c verbunden ist, der sich im vorderen Schaftabschnitt 13b bis zur Aufnahmehülse 18 erstreckt und antriebsmäßig mit dieser verbunden ist. Zur Verbindung der Antriebswellenabschnitte 53a, 53b, 53c ist jeweils ein Zahnradgetriebe vorgesehen. Am vorderen Ende des ersten Antriebswellenabschnitts 53a ist ein Zahnrad 54 mit einer Innenverzahnung angeordnet, die mit einem Ritzel 55 am hinteren Ende des zweiten Antriebswellenabschnitts 53b kämmt. Dabei ist der zweite Antriebswellenabschnitt 53b bezüglich dem Scheitel 13c Abwinklung oder Krümmung zur dem Werkzeug 6 abgewandten Seite hin versetzt angeordnet, wobei am vorderen Ende des zweiten Antriebswellenabschnitts 53b und am hinteren Ende des dritten Antriebswellenabschnitts 53c jeweils ein Ritzel 56, 57 im wesentlichen in einer Querebene bzw. einander überlappend angeordnet sind im Sinne von Stirn- oder Kegelrädern, die miteinander kämmen. Der zweite und der dritte Antriebswellenabschnitt 53b, 53c schließen einen stumpfen Winkel W1 ein, der zur dem Werkzeug 6 abgewandten Seite hin offen ist. Der Winkel W2, den der vordere Endbereich des vorderen Schaftabschnitts 13b und dessen hinterer Endbereich oder der hintere Schaftabschnitt 13a einschließen, ist ebenfalls stumpf.

Die Antriebsverbindung zwischen dem dritten Antriebswellenabschnitt 53c und der Aufnahmehülse 18 ist durch ein Winkelzahnradgetriebe mit einem Kegelzahnrad 58 am vorderen Ende des dritten Antriebswellenabschnitts 53c und einem Kegelzahnrad 59 auf der Aufnahmehülse 18 gebildet. Der Zahneingriff zwischen dem Kegelzahnrädern 58, 59 ist bezüglich des dritten Antriebswellenabschnitts 53c auf dessen dem Werkzeug 6 abgewandten Seite angeordnet. Hierdurch wird die Aufnahmehülse 18 in der gleichen Drehrichtung angetrieben, wie der erste Antriebswellenabschnitt 53a. Die Aufnahmehülse 18 ist mittels zwei Wälzlagern 61, 62 (Fig. 2) im Kopf 14 drehbar gelagert, die einen längs der Drehachse 16 gerichteten Abstand voneinander aufweisen, der größer ist als das Kegelzahnrad 58, so dass letzteres dazwischen angeordnet werden kann, einschließlich dem Kegelrad 59, das auf der dem Werkzeug 6 abgewandten Seite des Kegelrades 58 und zugleich auf der dem Werkzeug 6 zugewandten Seite des Wälzlagers 61 angeordnet ist, das vom Werkzeug 6 weiter entfernt angeordnet ist als das andere Wälzlager 62. Zur Drehlagerung des zweiten Antriebswellenabschnitts 53c ist jeweils ein Wälzlager 63, 64 (Fig. 2) auf den Endbereichen dieses Antriebswellenabschnitts 53c angeordnet, deren Außenringe in einem nicht dargestellten Längsloch des Schaftabschnitts 13b sitzen und gelagert sind.

Die Ausgestaltung des Zahnrads 54 als Hohlrad ermöglicht bei radial kleiner Bauweise eine verhältnismäßig große Übersetzung der Drehzahl zwischen dem ersten und dem zweiten Antriebswellenabschnitt 53a, 53b.

Beim Ausführungsbeispiel nach Fig. 2 und 3 sind zur Lagerung des ersten Antriebswellenabschnitts 53a und des zweiten Antriebswellenabschnitts 53b jeweils im Schaft 13 ein zweireihiges Wälzlager 65,66 in einer Lagerbuchse vorgesehen. Dieses Wälzlager 65, 66 reicht jeweils aus, den gesamten Antriebswellenabschnitt 53a bzw. 53b hinreichend stabil zu lagern. Der erste Antriebswellenabschnitt 53a überragt das Wälzlager 65 nach hinten frei abstehend, wodurch eine geringfügige radiale Flexibilität zum Kuppeln mit dem Antriebswellenabschnitt 53d des Anschlussteils 2 vorhanden ist. Zur Vergrößerung der Flexibilität kann zwischen dem ersten Antriebswellenabschnitt 53a und dem Zahnrad 54 eine Gelenkverbindung 68 mit einem Querstift 69 verbunden sein, wodurch die radiale Flexibilität des ersten Antriebswellenabschnitts 53a vergrößert ist. Das Zahnrad 54 besteht aus einem hinteren zylindrischen oder hohlzylindrischen Lagerabschnitt 54a, an dessen vorderem Ende ein Flansch 54b angeordnet ist, der an seiner Vorderseite den Hohlzahnkranz 54 trägt.

Die Wälzlager 65, 66 können zwei, z. B. einen axialen Abstand voneinander aufweisende Wälzlagerinnenringe 65b, 66b oder auch eine axial durchgehende Wälzlagerinnenhülse (nicht dargestellt) aufweisen.

Bei den Wälzlagern 65, 66 kann der axiale Abstand der Wälzkörperreihen voneinander vorzugsweise größer bemessen sein, als der mittlere Durchmesser der Wälzkörperlaufrillen. Das Wälzlager 66 ist so lang bemessen, siehe L, dass es zwischen die Ritzel 55, 56 passt, wodurch zugleich eine axiale Begrenzung für den zweiten Antriebswellenabschnitt 52b gebildet ist.

Beide Wälzlager 65, 66 sind vorzugsweise in einem gemeinsamen, eine Lagerbuchse 23 bildenden Tragkörper 71 gelagert, der im der Scheitelstelle benachbarten Bereich des hinteren Schaftabschnitts 13a im Schaft 13 sitzt und durch ein nach hinten oder nach vorne ausmündendes Aufnahmeloch 71a von hinten montierbar und nach hinten wieder demontierbar ist oder umgekehrt sowie im Schaftabschnitt 13a axial fixierbar ist.

Zur axialen Sicherung bzw. Positionierung ist dem Wälzlager 66 in der Lagerbuchse 23 eine Sicherungsvorrichtung 20 mit wenigstens einem Sicherungsring 24 aus elastisch verformbaren bzw. elastisch komprimierbarem Material zugeordnet, der in einer Ringnut 25 in der Innenmantelfläche 23a der Lagerbuchse 23 so tief angeordnet ist, dass er die Innenmantelfläche 23a überragt und somit einen Sicherungswulst bildet, mit dem er in einer der Ringnut 25 radial gegenüberliegenden Ringnut 26 in der Außenmantelfläche 66c des Wälzlageraußenringes 66a sitzt. Vorzugsweise drückt der Sicherungsring 24 mit einer z.B. kleinen elastischen Vorspannung radial einwärts gegen den Grund der Ringnut 26. Dies kann dadurch erreicht werden, dass der Innendurchmesser des Sicherungsringes 24 kleiner ist als der Innendurchmesser der Ringnut 26 und/oder dadurch, dass die halbe Differenz zwischen dem Innendurchmesser der Ringnut 26 und dem Außendurchmesser der Ringnut 25 etwas kleiner bemessen ist, als der Durchmesser des im Querschnitt vorzugsweise runden Sicherungsringes 24. In beiden Fällen ist der Sicherungsring 24 radial nach innen gegen den Grund der Ringnut 26 elastisch vorgespannt. Zur Verbesserung der axialen Positionierung ist es auch vorteilhaft, wenn die axiale Breite der Ringnuten 25, 26 etwas kleiner ist als die axiale Abmessung des Sicherungsringes 24, so dass dieser zwischen den Seitenwänden bzw. Flanken 26a der Ringnut 25, 26 elastisch komprimiert ist. Beim Ausführungsbeispiel ist die Querschnittsform der Ringnut 25 viereckig und die Querschnittsform der Ringnut 26 kreisbogenabschnittförmig gerundet. Es sind jedoch auch andere Querschnittsformen möglich.

Zur Erleichterung der Montage weist das Wälzlager 66 wenigstens an einer Stirnseite eine gerundete oder spitzwinklige Einführungsfläche 27 auf, die beim axialen Einschieben des Wälzlagers 66 in die Lagerbuchse 23 den Sicherungsring 24 selbsttätig elastisch verformt und dehnt und dieser in der Montageposition selbsttätig wieder in die Ringnut 26 einfedert. Vorzugsweise ist an beiden Stirnseiten eine Einführungsfläche 27 vorgesehen.

Es ist im weiteren vorteilhaft, die Ringnut 26 bezüglich den Laufrillen der Wälzkörper 22 axial versetzt anzuordnen, wodurch die Materialschwächung des Wälzlageraußenrings 66a von geringerer oder ohne Auswirkung ist. Vorzugsweise sind die Wälzlager 66 gleich ausgebildet, so dass das Wälzlager 66 wahlweise an der einen oder an der anderen Lagerstelle passt, z.B. in einer um 180° verdrehten Position.

Falls eine axiale Sicherung des Wälzlagers 66 nur in einer axialen Richtung gewünscht ist, kann die Ringnut 26 nach einer Seite axial auslaufend ausgebildet sein, wie es das noch zu beschreibende Ausführungsbeispiel nach Fig. 3 an sich zeigt. Bei jener Ausgestaltung sind die einander zugewandten Flanken 26a der Ringnut 26 an den axialen Abstand der vorhandenen Sicherungsringe 24 angepasst und zwar vorzugsweise so, dass die Sicherungsringe 24 mit einer elastischen Spannung bzw. Kompression gegen die vorzugsweise konvergenten Flanken 26a drücken.

Wie die Fig. 2 und 3 im weiteren erkennen lassen, sind um eine axial wirksame Nachgiebigkeit für die Sicherungsvorrichtung 20 zu erhalten, ist es vorteilhaft, das zugehörige Wälzlager 66 jeweils in einem axialen Abstand von zugehörigen Bauteilen des Kopfgehäuses anzuordnen, so dass die vorbeschriebene axiale Nachgiebigkeit nicht begrenzt ist. Wenn die axiale Nachgiebigkeit nur in einer Achsrichtung gewünscht ist, kann der betreffende Wälzlagerring in der anderen Achsrichtung durch eine Anlagefläche begrenzt sein.

Beim Ausführungsbeispiel sind zwei Ringnuten 25 jeweils mit einem Sicherungsring 24 in der Lagerbuchse 23 angeordnet, die bezüglich den Wälzlagerrillen z.B. nach innen versetzt sind.

Wie sich aus Fig. 2 und 3 im weiteren entnehmen lässt, ist das hintere Wälzlager 65 in das Aufnahmeloch 71a des Tragkörpers 71 von hinten eingeschoben und z. B. durch einen am hinteren Ende der Außenlagerhülse 65a angeordneten Flansch 65c nach vorne hin axial fixiert. Das vordere Wälzlager 66 ist dagegen von vorne in ein Aufnahmeloch 72 des Tragkörpers 71 eingesetzt und durch eine Sicherungsvorrichtung 20 mit einem oder zwei Sicherungsringe 24 axial fixiert bzw. positioniert. Der das Zahnrad 54 bildende Flansch ist im Aufnahmeloch 71a zwischen dem Wälzlager 65 und dem Grund des Aufnahmelochs 71a mit Bewegungsspiel gelagert. Der Außenring 65a kann durch eine der Sicherungsvorrichtung 20 gemäß Fig. 3 entsprechende und um 180° verdrehte Sicherungsvorrichtung gegen eine ungewollte Verschiebung nach hinten gerichtet sein, was in Fig. 2 und 3 nicht dargestellt ist.

Bei der Ausgestaltung nach Fig. 3 kann folgende Besonderheit vorgesehen sein. Zum einen ist der Wälzlageraußenring, hier die gemeinsame Außenlagerhülse 66a, an einem ihrer Enden, hier an ihrem hinteren Ende, an einer Schulter 67 in der Lagerbuchse 23 positioniert, die durch eine Stufenfläche in der die Außenlagerhülse 66a aufnehmenden Bohrung gebildet sein kann. Außerdem ist die wenigstens eine Ringnut 26 bei Anlage der Außenlagerhülse 66a an der Schulter 67 bezüglich der zugehörigen Ringnut 25 zu der der Schulter 67 abgewandten Achsrichtung hin versetzt, was aus Fig. 3 deutlich zu entnehmen ist. Durch diesen Versatz wird der Sicherungsring 24 bezüglich seiner Ringebene unsymmetrisch verformt, wobei er auf aufgrund seiner Elastizität bestrebt ist, seine symmetrische Form einzunehmen. Hierdurch erzeugt der Sicherungsring 24 eine axiale Kraft, siehe Pfeil 68, die die Außenlagerhülse 66a gegen die Schulter 67 elastisch vorspannt und somit deren Anlage an der Schulter 67 gewährleistet.

Ein weiterer Vorteil der Sicherungs- bzw. Positioniervorrichtung 20 besteht darin, dass durch den Sicherungsring 24 eine Ringdichtung zur Abdichtung der Fuge zwischen der Innenmantelfläche 23a und dem Lagerzapfen gebildet wird, und zwar insbesondere dann, wenn der Sicherungsring 24 nicht nur gegen den Grund der Ringnut 26, sondern auch gegen den Grund der Ringnut 25 elastisch vorgespannt ist.

Mit 81 ist ein Lichtleitstab bezeichnet, der in Randnähe der Werkzeugseite des Schaftes 13 in diesem von hinten nach vorne auf das freie Ende des Werkzeug 6 gerichteten Austrittsfenster 82 erstreckt. Im Funktionsbetrieb dieses Handstücks 3 wird Licht von einer Lichtquelle 83 in den Lichtleitstab 81 eingekoppelt, wobei die Lichtquelle 83 auf einem im oder am Anschlussteil 2 drehbar gelagerten Karussell 84 (andeutungsweise dargestellt) angeordnet ist, das durch einen Mitnehmer 13d formschlüssig mit dem Handstück 13 verbunden ist, so dass auch in diesem Falle die freie Drehbarkeit des Handstücks 3 in der Steck/Drehkupplung 4 gewährleistet ist. Der Lichtleitstab 81 und/oder andere Medienleitungen können in einer außen offenen Längsnut 73 im Tragkörper 71 verlaufen. Es können mehrere Längsnuten 73 in Umfangsrichtung versetzt zueinander angeordnet sein. Im Bereich der wenigstens einen Längsnut 73 kann auch im Flansch 65c jeweils eine Längsnut angeordnet sein.

Die erfindungsgemäße Sicherungsvorrichtung 20 kann auch zwischen dem Innenring 65b bzw. 66b und dem betreffenden Drehteil 12 in den vorbeschriebenen Ausgestaltungen entsprechenden Ausgestaltungen angeordnet sein.

Der in Fig. 1 und 2 zwischen der Mittelachse des vorderen Schaftabschnitts 13b und der Drehachse 16 der Aufnahmehülse 18 eingeschlossene Winkel W3 beträgt mehr als 90°, vorzugsweise im wesentlichen 100. Eine solche Ausgestaltung ist unter Berücksichtigung der Anatomie im Mundraum eines Patienten besonders günstig.

Das stabförmige Handstück 3 bildet ein Griffteil mit dem hinteren Griff- bzw. Schaftabschnitt 13a, der sich vorzugsweise gerade erstreckt und dem sich daran nach vorne anschließenden vorderen Griff- bzw. Schaftabschnitt 13b, der gemäß Fig. 1 zur der Einstecköffnung 5a abgewandten Seite hin gekrümmt verläuft. Die Krümmung kann gleichmäßig, insbesondere kreisbogenabschnittförmig, oder in der Richtung nach vorne degressiv ausgebildet sein, d. h., der Schaftabschnitt 13b kann in seinem hinteren Bereich stärker gekrümmt sein als in seinem vorderen Bereich. Der Winkelbereich W4, in dem die Krümmung verläuft, kann etwa 10° bis 28°, insbesondere etwa 19°, betragen. Der äußere Krümmungsradius r kann etwa 145 mm bis 175 mm, insbesondere etwa 160 mm, aufweisen. Die Länge des gekrümmten Schaftabschnitts 13b kann etwa die Hälfte der Gesamtlänge des Schaftes 13 betragen. Die Mittelachse 16 der Haltevorrichtung 5 schließt mit dem sich vom Kreuzungspunkt nach hinten erstreckenden Abschnitt der gekrümmten Mittelachse 13e bzw. einer die gekrümmte Mittelachse 13e im Kreuzungspunkt berührenden Tangente T den Winkel W3 ein. Der Kreuzungspunkt zwischen den Mittelachsen 5a und 13e kann am vorderen Ende des Winkelbereichs W4 liegen oder einen axialen Abstand x von dem Winkelbereich W4 aufweisen.

Der vordere Schaftabschnitt 13b kann sich kontinuierlich und dabei gleichmäßig oder ungleichmäßig, z. B. degressiv nach vorne verjüngen, so dass sich seine Querschnittsabmessung y im vorderen Endbereich etwa 9 mm betragen kann. Im hinteren Bereich des vorderen Schaftabschnitts 13b kann die entsprechende Querschnittsabmessung z im Wesentlichen 15,2 mm betragen.

Wenigstens der vordere Schaftabschnitt 13b ist zur Vergrößerung seiner Grifffestigkeit an seiner Mantelfläche rau ausgebildet. Hierzu kann eine im Einzelnen nicht dargestellte Mikrostruktur 86 dienen, deren Rautiefe etwa 3 µm bis 15 µm, vorzugsweise etwa 6 µm, beträgt. Diese raue Oberfläche kann direkt an die Oberfläche des vorzugsweise aus Metall, z. B. korrosionsfestem Stahl, insbesondere Neusilber, bestehenden Schaftabschnitt 13b eingearbeitet sein oder sie kann auch in die Oberfläche einer Beschichtung des Schaftabschnitts 13b eingearbeitet sein.

In der vorbeschriebenen Weise kann auch der Schaft 13 insgesamt rau ausgebildet sein.

Der Schaft 13 kann mit seinen Abschnitten 13a, 13b einteilig oder zweiteilig ausgebildet sein. Bei einer zweiteiligen Ausgestaltung können die Schaftabschnitte 13a, 13b lösbar, z. B. miteinander verschraubt, oder unlösbar miteinander verbunden sein.

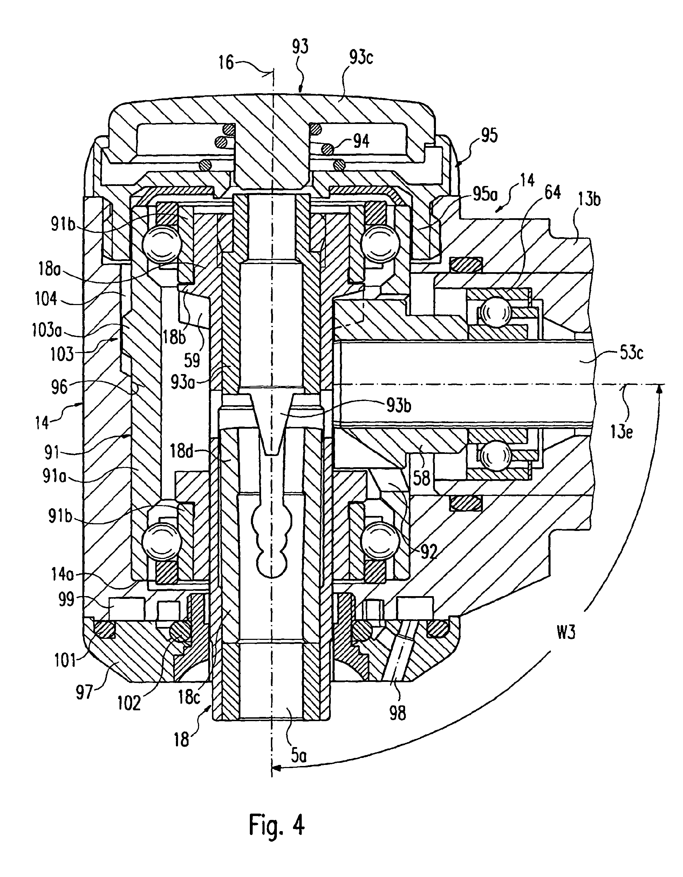

Beim Ausführungsbeispiel nach Fig. 4 ist die Aufnahmehülse 18 im Kopf 14 in einem zweireihigen Wälzlager 91 gelagert, das eine durchgehende Außenlagerhülse 91a und zwei in einem axialen Abstand voneinander angeordnete Innenlagerhülsen 91b aufweist. Der vordere Antriebswellenabschnitt 53c durchgreift mit seinem vorderen Kegelzahnrad 58 die Außenlagerhülse 91a in einem radialen Durchführungsloch 92, und es kämmt mit dem innerhalb der Außenlagerhülse 91a und zwischen den Innenlagerringen 91b angeordneten Kegelzahnrad 59. Letzteres ist vorzugsweise zur der Einstecköffnung 5a abgewandten Seite versetzt angeordnet, so dass es mit dem Kegelzahnrad 58 auf dessen der Einstecköffnung 5a abgewandten Seite kämmt. Beim Ausführungsbeispiel ist das Kegelzahnrad 59 an einer endseitigen Verdickung 18a der Aufnahmehülse 18 angeordnet, z. B. einteilig ausgebildet. Auf der wenigstens abschnittsweise außen zylindrisch ausgebildeten Verdickung 18a kann der Innenlagerring 91b der zugehörigen Wälzkörperreihe gelagert sein und vorzugsweise mit seinem der Einstecköffnung 5a zugewandten Ende an einem Flansch 18b der Verdickung 18a anliegen, an dem auch die Verzahnung dem Innenlagerring 91b abgewandten Seite ausgebildet sein kann. Zwischen der Mittelachse 16 und der Mittelachse 13e bzw. der Tangente T ist der Winkel W3 eingeschlossen. Der Winkel W3 kann jedoch auch etwa 90° betragen wie es in Fig. 4 dargestellt ist. Im Rahmen der Erfindung ist es auch möglich, dass Kegelzahnrad 59 zum Einsteckloch 5a versetzt anzuordnen, so dass es mit dem Kegelzahnrad 58 auf dessen der Einstecköffnung 5a zugewandten Seite kämmt, was nicht dargestellt ist. Die vorbeschriebenen Varianten bezüglich des Winkels W3 und der Position des Kegelzahnrads 59 können auch bei den Ausführungsbeispielen gemäß Fig. 1 und 2 alternativ vorhanden sein.

Beim Ausführungsbeispiel nach Fig. 4 ist in der Aufnahmehülse 18 in dessen der Einstecköffnung 5a zugewandten Bereich eine an sich bekannte Klemmhülse 18c mit einander gegenüberliegenden Backen 18d für den Schaft des Werkzeugs 5 angeordnet. Zum Lösen des Werkzeugs 5 ist auf der der Einstecköffnung 5a abgewandten Seite eine Lösevorrichtung 93 angeordnet, mit einem Lösestift 93a, der in der Aufnahmehülse 18 axial verschiebbar gelagert ist und mit einem Keil 93b zwischen die Klemmbacken 18d schiebbar ist. Zum Betätigen des Lösestiftes 93a ist eine Drucktaste 93c vorgesehen, die gegen die Kraft einer durch einen Flansch der Drucktaste 93c verdeckt angeordneten Druckfeder 94 einschiebbar ist. Die Lösevorrichtung 93 mit der Drucktaste 93c ist an einem Schraubflansch 95 angeordnet, der mit einem hohlzylindrischen Schraubring 95a in ein Gewindeloch des Kopfes 14 einschraubbar ist und ein Aufnahmeloch 96 abdeckt, in dem der Außenlagerring 91a passend von der der Einstecköffnung 5a abgewandten Seite her eingeschoben ist und mit seinem der Einstecköffnung 5a zugewandten Ende an einer Innenschulter 14a des Kopfes 14 anliegt und somit zwischen letzterer und dem Schraubflansch 95 axial begrenzt ist.

An der Werkzeugseite des Kopfes 14 ist ein die Aufnahmehülse 18 umgebender Schraubflansch 97 in den Kopf 14 eingeschraubt, der eine oder mehrere auf dem Umfang verteilt angeordnete und auf die Behandlungsstelle gerichtete Kanäle 98 aufweist, die von einer Ringnut 99 im Kopf 14 ausgehen, die mit der Medienleitung 11 verbunden ist. Zur Abdichtung der Ringnut 99 sind zwei konzentrisch angeordnete O-Ringe 101, 102 zwischen dem Schraubflansch 97 und dem Kopfgehäuse in Ringnuten angeordnet, die vorzugsweise im Schraubflansch 97 ausgebildet sind.

Zur Sicherung des Durchführungsloch 92 in seiner Position ist für den Außenlagerring 91a eine Drehsicherung 103 vorgesehen, die vorzugsweise formschlüssig wirksam ist. Beim Ausführungsbeispiel wird die Drehsicherung 103 durch einen Ansatz 103a am Umfang des Lageraußenrings 91a und eine diesen aufnehmende Ausnehmung 104 in der Wand des Kopfes 14 gebildet. Die Ausnehmung 104 ist ein zur der Einstecköffnung 5a abgewandten Seite hin auslaufender Schlitz gebildet, so dass die Außenlagerhülse 91a einschiebbar ist.

Der Wälzlageraußenring 91a ist zu seiner Stabilisierung zwischen den Wälzlagerreihen vorzugsweise innen verdickt.

## Patentansprüche

1. Medizinisches oder dentalmedizinisches Handstück (3) mit einem länglichen Schaft (13), der in seinem vorderen Endbereich einen Werkzeughalter (5) mit einer seitlichen Einstecköffnung (5a) für ein Werkzeug (6) aufweist, und der einen hinteren und einen vorderen Schaftabschnitt (13a, 13b) aufweist, die einen stumpfen Winkel (W2) einschließen, der zur der Einstecköffnung (5a) abgewandten Seite hin offen ist,
wobei in den Schaftabschnitten (13a, 13b) jeweils ein Antriebswellenabschnitt (53a, 53c) drehbar gelagert ist, die durch miteinander kämmende Zahnräder in Antriebsverbindung stehen,
wobei der vordere Antriebswellenabschnitt (53c) durch miteinander kämmende Zahnräder (58, 59) mit dem Werkzeughalter (5) in Antriebsverbindung steht, wobei zwischen dem hinteren Antriebswellenabschnitt (53a) und dem vorderen Antriebswellenabschnitt (53c) ein mittlerer Antriebswellenabschnitt (53b) zur der Einstecköffnung (5a) abgewandten Seite versetzt angeordnet ist, dessen hinteres Zahnrad (55) mit einem Hohlzahnkranz des vorderen Zahnrades (54) des hinteren Antriebswellenabschnitts (53a) kämmt,
und wobei der vordere Antriebswellenabschnitt (53c) und der mittlere Antriebswellenabschnitt (53b) durch Zahnräder (56, 57) in Antriebsverbindung miteinander stehen,
**dadurch gekennzeichnet,**
**daß** die Zahnräder (56, 57) als Ritzel in Form von Stirn- oder Kegelrädern ausgebildet sind und das hintere Zahnrad (57) des vorderen Antriebswellenabschnitts (53c) auf seiner der Einstecköffnung (5a) abgewandten Seite mit dem zugehörigen Zahnrad (56) des mittleren Antriebswellenabschnitts (53b) kämmt.

2. Medizinisches oder dentalmedizinisches Handstück nach Anspruch 1,
**dadurch gekennzeichnet,**
**dass** der zwischen der Mittelachse (16) der Einstecköffnung (5a) und der Mittelachse (13e) des vorderen Schaftabschnitts (13b) eingeschlossene Winkel (W3) größer ist als 90° und das vordere Zahnrad (58) des vorderen Antriebswellenabschnitts (53c) auf seiner der Einstecköffnung (5a) abgewandten Seite mit dem Zahnrad (59) des Werkzeughalters (5) kämmt.

3. Handstück nach Ansprüche 1 oder 2,
**dadurch gekennzeichnet,**
**dass** der vordere Schaftabschnitt (13b) zur der Einstecköffnung (5a) abgewandten Seite hin bogenförmig gekrümmt ist.

4. Handstück nach einem der vorherigen Ansprüche
**dadurch gekennzeichnet,**
**dass** der Anfang der Krümmung im Bereich des mittleren Antriebswellenabschnitts (53b) oder des Scheitels (13c) angeordnet ist.

## Claims

1. Medical or dental-medical handpiece (3) having an elongate shaft (13) which in its forward end region has a toolholder (5) with a lateral insertion opening (5a) for a tool (6), and which has a rearward and a forward shaft section (13a, 13b) which include an obtuse angle (W2), which is open to the side away from the insertion opening (5a),
wherein in the shaft sections (13a, 13b) in each case there is rotatably mounted a drive shaft section (53a, 53c), which stand in drive connection through gear wheels meshing with one another,
wherein the forward drive shaft section (53c) stands in drive connection with the toolholder (5) through gear wheels (58, 59) meshing with one another,
wherein between the rearward drive shaft section (53a) and the forward drive shaft section (53c) a middle drive shaft section is arranged, offset (53b) towards the side away from the insertion opening (5a), the rearward gear wheel (55) of which meshes with a hollow gear rim of the forward gear wheel (54) of the rearward drive shaft section (53a),
and wherein the forward drive shaft section (53c) and the middle drive shaft section (53b) stand in drive connection with one another through gear wheels (56, 57),
**characterised in that**,
the gear wheels (56, 57) are formed as pinion gears in the form of spur gears or bevel gears and the rearward gear wheel (57) of the forward drive shaft section (53c), on its side away from the insertion opening (5a), meshes with the associated gear wheel (56) of the middle drive shaft section (53b).

2. Medical or dental-medical handpiece according to claim 1,
**characterised in that**,
the angle (W3) included between the middle axis (16) of the insertion opening (5a) and the middle axis (13e) of the forward shaft section (13b) is larger than 90° and the forward gear wheel (58) of the forward drive shaft section (53c) meshes, on its side away from the insertion opening (5a), with the gear wheel (59) of the toolholder (5).

3. Handpiece according to claim 1 or 2,
**characterised in that**,
the forward shaft section (13b) is curved in an arclike manner towards the side away from the insertion opening (5a).

4. Handpiece according to any preceding claim,
**characterised in that**,
the beginning of the curvature is arranged in the region of the middle drive shaft section (53b) or of the apex (13c).

## Revendications

1. Pièce à main (3) médicale ou médico-dentaire, comportant une tige (13) longiligne, qui, au niveau de sa zone d'extrémité avant est munie d'un porte-outil (5) avec une ouverture d'enfichage (5a) latérale pour un outil (6), et qui comporte une partie de tige arrière (13a) et une partie de tige avant (13b) qui délimitent entre elles un angle obtus (W2) qui est ouvert vers le côté opposé à l'ouverture d'enfichage (5a),
sachant que dans chacune des parties de tige (13a, 13b) est montée de manière rotative une partie d'arbre d'entraînement (53a, 53c), qui sont liées en entraînement par des roues dentées engrenant les unes dans les autres,
la partie d'arbre d'entraînement avant (53c) étant liée en entraînement avec le porte-outil (5) par l'intermédiaire de roues dentées (58, 59) engrenant l'une dans l'autre, sachant qu'entre la partie d'arbre d'entraînement arrière (53a) et la partie d'arbre d'entraînement avant (53c) est disposée une partie d'arbre d'entraînement centrale (53b), qui est décalée vers le côté opposé à l'ouverture d'enfichage (5a) et dont la roue dentée arrière (55) engrène avec une couronne dentée de la roue dentée avant (54) de la partie d'arbre d'entraînement arrière (53a),
et la partie d'arbre d'entraînement avant (53c) et la partie d'arbre d'entraînement centrale (53b) sont liées en entraînement par des roues dentées (56, 57),
**caractérisée en ce que**
les roues dentées (56, 57) sont réalisées sous la forme de pignons en forme de roues droites ou de roues coniques, et la roue dentée arrière (57) de la partie d'arbre d'entraînement avant (53c), sur son côté opposé à l'ouverture d'enfichage (5a), engrène avec la roue dentée (56) associée de la partie d'arbre d'entraînement centrale (53b).

2. Pièce à main médicale ou médico-dentaire selon la revendication 1, **caractérisée en ce que** l'angle (W3), délimité entre l'axe médian (16) de l'ouverture d'enfichage (5a) et l'axe médian (13e) de la partie de tige avant (13b), est supérieur à 90°, et la roue dentée avant (58) de la partie d'arbre d'entraînement avant (53c), sur son côté opposé à l'ouverture d'enfichage (5a), engrène avec une roue dentée (59) du porte-outil (5).

3. Pièce à main selon la revendication 1 ou 2, **caractérisée en ce que** la partie de tige avant (13b) est courbée en arc vers le côté opposé à l'ouverture d'enfichage (5a).

4. Pièce à main selon l'une quelconque des revendications précédentes, **caractérisée en ce que** le début de la courbure est situé dans la zone de la partie d'arbre d'entraînement centrale (53b) ou du sommet (13c).
